# EUROPÄISCHE PATENTSCHRIFT

(11) **EP 1 954 844 B1**
(45) Veröffentlichungstag und Bekanntmachung des Hinweises auf die Patenterteilung: **29.09.2010**
(21) Anmeldenummer: 06830129.0
(22) Anmeldetag: 27.11.2006
(51) Int. Cl.: C22C 19/05, B23K 31/02, B23K 35/30

(54) **VERFAHREN ZUM REPARIEREN VON RISSEN IN BAUTEILEN UND LOTMATERIAL ZUM LÖTEN VON BAUTEILEN**
METHOD FOR REPAIRING CRACKS IN COMPONENTS AND SOLDER MATERIAL FOR SOLDERING COMPONENTS
PROCEDE DE REPARATION DE FISSURES DANS DES COMPOSANTS ET MATERIAU D'APPORT DESTINE AU SOUDAGE DE COMPOSANTS

(30) Priorität: 28.11.2005 EP 05025899
(43) Veröffentlichungstag der Anmeldung: 13.08.2008
(73) Patentinhaber: SIEMENS AKTIENGESELLSCHAFT, 80333 München (DE); MTU Aero Engines GmbH, 80995 München (DE)
(72) Erfinder: VOLEK, Andreas, 91074 Herzogenaurach (DE); SINGER, Robert, 91054 Erlangen (DE)
(86) Internationale Anmeldenummer: PCT/EP2006/068920
(87) Internationale Veröffentlichungsnummer: WO 2007/060230

(56) Entgegenhaltungen:
- EP-A- 1 561 536
- WO-A-02/50323
- US-A- 4 008 844
- US-A- 5 240 491
- O'NEILL W M ET AL: "Braze Repair of Gas Turbine Components: Retrospective, Perspective, Prospective" ASM PROC. HEAT TREAT.; ASM PROCEEDINGS: HEAT TREATING 2000, Bd. 2, 2000, Seiten 1040-1045, XP009063457
- M. ROTH, B. FRITSCHE, R. BAUMANN: "Reparatur von gerichtet erstarrten und einkristallinen Gasturbinenschaufeln" VDI BERICHTE, Nr. 1421, 1998, Seiten 339-353, XP009063456
- W.A. DEMO, S.J. FERRIGNO: "Brazing method helps repair aircraft gas-turbine nozzles" ADVANCED MATERIALS & PROCESSES, Bd. 141, Nr. 3, 1992, Seiten 43-45, XP009063312

## Beschreibung

Die vorliegende Erfindung betrifft ein Verfahren zum Reparieren von Rissen in Bauteilen, die aus einer Superlegierung bestehen, insbesondere aus einer Superlegierung mit einer gerichteten Mikrostruktur, wobei das Verfahren dann derart ausgestaltet ist, dass ein reparierter Riss ebenfalls eine gerichtete Mikrostruktur aufweist. Daneben betrifft die Erfindung ein Lotmaterial zum Löten von Bauteilen, die aus einer Superlegierung bestehen, insbesondere aus einer solchen mit einer gerichteten Mikrostruktur.

Die Verbesserung von Flugzeuggasturbinen und die elektrische Energieerzeugung mittels stationärer Gasturbinen rückt aufgrund der mit den Gasturbinen realisierbaren hohen Wirkungsgrade immer mehr in den Vordergrund. In einer Gasturbine wird angesaugte Luft verdichtet und einer Brennkammer zugeführt. In der Brennkammer wird ein Gemisch aus der zugeführten Luft und einem Brennstoff gezündet und die unter hohem Druck stehenden heißen Verbrennungsabgase einem Turbinenabschnitt der Gasturbine zugeleitet. Die Verbrennungsabgase dienen dabei als Arbeitsmedium, welches die Turbine in Rotation, typischerweise mit einer Frequenz von 50 bis 60 Hz, versetzt. Das Arbeitsmedium tritt hierbei mit einer Temperatur von rund 1200°C auf die ersten Turbinenschaufeln auf. In Folge der Rotation sind die heißen Turbinenschaufeln hohen statischen Lasten durch Fliehkräfte ausgesetzt. Zudem werden durch das einströmende heiße Gas dynamische Lasten hervorgerufen. Je nach verwendetem Brennstoff kommen zudem mehr oder minder starke korrosive Belastungen auf die Bauteile des Turbinenabschnittes, insbesondere auf die Turbinenschaufeln zu.

Beispielsweise die Laufschaufeln der ersten Laufschaufelreihe der Turbine werden deshalb häufig aus so genannten hochwarmfesten Superlegierungen auf Nickel-, Kobalt- oder Eisenbasis hergestellt. Solche Superlegierungen sind beispielsweise aus der EP 1 204 776 B1, der EP 1 306 454, der EP 1 319 729 A1, der WO 99/67435 oder der WO 00/44949 bekannt.

Aufgrund des üblicherweise äußerst komplexen Schaufeldesigns und der relativ geringen Eignung derartiger Legierungen zum Umformen, erfolgt die Herstellung von Turbinenschaufeln im Vakuumgießverfahren. Der Erstarrungsablauf wird dabei so gesteuert, dass eine gerichtete Mikrostruktur im Bauteil entsteht, die gegenüber den später auftretenden Lasten eine besonders vorteilhafte Orientierung aufweist. Unter dem Begriff gerichteter Mikrostruktur sind sowohl einkristalline Strukturen als auch Strukturen mit einer Kornstruktur, in der die Ausdehnung der Körner eine gemeinsame Vorzugsrichtung aufweist, anzusehen. Im letztgenannten Fall können die Körner beispielsweise in einer bestimmten Vorzugsrichtung eine größere Abmessung aufweisen als in den übrigen Richtungen (sog. Stängelkristalle). Bauteile mit einer derartigen Kornstruktur werden auch als gerichtet erstarrte Bauteile (directionally solidified) bezeichnet.

Die ständigen hohen statischen und dynamischen Lasten von Turbinenbauteilen und insbesondere von Laufschaufeln des Turbinenabschnittes, führen dazu, dass diese in regelmäßigen Abständen einer Revision unterzogen werden, um sie auf ihre Eignung für einen weiteren Einsatz hin zu begutachten. Beschädigte Bauteile werden im Rahmen dieses Revisionsprozesses entweder ausgetauscht oder repariert. Neben starken Materialverlusten durch Korrosion sind insbesondere Ermüdungsrisse die am häufigsten auftretenden Ursachen für einen Austausch der Bauteile. Insbesondere bei Laufschaufeln treten derartige Ermüdungsrisse quer zur Schaufellängsachse auf.

Aufgrund der hohen Material- und Herstellungskosten für Turbinenbauteile mit einer gerichteten Mikrostruktur muss ein Kraftwerksbetreiber oder ein Hersteller für Flugzeuggasturbinen für die Instandhaltung einer Gasturbinenanlage relativ hohe Kosten einkalkulieren, bspw. für den Austausch von Turbinenschaufeln. Vor dem Hintergrund eines steigenden Kostendruckes werden daher Reparaturverfahren, welche die Betriebsfähigkeit eines beschädigten Turbinenbauteils, insbesondere einer beschädigten Laufschaufel, wiederherstellt, zunehmend attraktiver. Ein repariertes Bauteil kann dann wieder in die Gasturbinenanlage eingebaut werden und einen weiteren Einsatz bis zum nächsten Revisionsprozess erfahren.

Eine Möglichkeit, beschädigte Bauteile zu reparieren ist das Löten. Dabei wird ein Lotmaterial beispielsweise in einen Riss im Bauteil eingebracht und mittels Wärmeeinwirkung mit dem Material der Superlegierung verbunden. Der Lötprozess kann isoterm, also bei konstanter Temperatur, oder unter Verwendung eines Temperaturgradienten erfolgen.

Ein Verfahren zum isotermen Hartlöten von einkristallinen Gegenständen ist beispielsweise in EP 1 258 545 beschrieben. Darin wird ein Lotmaterial, welches in seiner Zusammensetzung der Superlegierung des Bauteils ähnelt, in einen Riss eingefüllt und über einen längeren Zeitraum auf eine Temperatur oberhalb des Schmelzpunktes des Lotmaterials gehalten. Dem Lotmaterial ist Bor zur Absenkung der Schmelztemperatur beigefügt. Aufgrund der hohen Temperatur finden Diffusionsprozesse statt, die dazu führen, dass ein Konzentrationsausgleich zwischen dem Lotmaterial und der Superlegierung herbeigeführt wird, die zu einem Erstarren des Lotmaterials führt. Dabei nimmt das erstarrte Lotmaterial bei Spaltbreiten bis ca. 200 µm die gerichtete Mikrostruktur der umgebenden Superlegierung an. Das Bor kann jedoch zur Bildung spröder Boride führen, welche die Eigenschaften des Bauteils im Bereich der reparierten Stelle beeinträchtigen. Außerdem ist das Verfahren für Spaltbreiten über ca. 200 µm nicht geeignet.

Ein Verfahren zum Löten von gerichtet erstarrten oder einkristallinen Komponenten unter Verwendung eines Temperaturgradienten ist beispielsweise in EP 0 870 566 beschrieben. In diesem Verfahren wird auf die zu reparierende Stelle eine Lotlegierung aufgelegt, die beispielsweise aus dem Grundwerkstoff zu reparierenden Teiles und einer Zugabe eines oder mehrerer schmelzpunktreduzierender Elemente besteht. Das zu reparierende Teil wird mit der aufgelegten Lotlegierung durch eine beheizte Zone bewegt, wobei in dieser beheizten Zone die durch die Heizung aufgebrachte Temperatur über der Schmelztemperatur der Lotlegierung liegt, aber kleiner als die örtliche Voraufschmelz-Temperatur des Teiles ist. Dadurch kommt es nicht zum partiellen Aufschmelzen der Superlegierung des zu reparierenden Teiles. Aufgrund der Bewegung wird im Lötgut ein thermischer Gradient erzeugt, der zu einer gerichteten Erstarrung des Lötgutes führt. Auch in diesem Fall werden dem Lötgut schmelzpunktherabsetzende Komponenten hinzugefügt, die, beispielsweise im Falle von Bor, die Eigenschaften der reparierten Stelle negativ beeinflussen können.

Ein Verfahren zum Reparieren von Bauteilen aus Superlegierungen unter Verwendung einer Pulvermischung ohne schmelzpunkterniedrigende Zusätze ist aus US 5240491 bekannt.

Aufgabe der vorliegenden Erfindung ist es, ein gegenüber dem Stand der Technik vorteilhaftes Verfahren zum Reparieren von Bauteilen, die aus einer Superlegierung bestehen, insbesondere aus einer Superlegierung mit einer gerichteten Mikrostruktur, zur Verfügung zu stellen.

Es ist eine weitere Aufgabe der vorliegenden Erfindung, ein Lotmaterial zur Verfügung zu stellen, dass sich vorteilhaft beim Löten von Superlegierungen, insbesondere von Superlegierungen mit einer gerichteten Mikrostruktur, verwenden lässt.

Die erste Aufgabe wird durch ein Verfahren zum Reparieren von Bauteilen nach Anspruch 1 gelöst, die zweite Aufgabe durch ein Lotmaterial nach Anspruch 9. Die abhängigen Ansprüche enthalten vorteilhafte Ausgestaltungen des erfindungsgemäßen Verfahrens.

Das erfindungsgemäße Verfahren ist ein Verfahren zum Reparieren von Bauteilen, die aus einer Superlegierung bestehen. Insbesondere kann die Superlegierung eine gerichtete Mikrostruktur aufweisen, und das Verfahren kann derart ausgestaltet, dass eine reparierte Stelle ebenfalls eine gerichtete Mikrostruktur aufweist. Unter einer gerichteten Mikrostruktur soll im Rahmen der vorliegenden Anmeldung eine einkristalline oder eine stängelkristalline Struktur zu verstehen sein. Es umfasst die Schritte:

Versehen der zu reparierenden Stelle mit einem Lotmaterial. Dies kann beispielsweise durch Auf- oder Einbringen des Lotmaterials auf bzw. in einen Riss des Bauteils wie etwa einer Turbinenschaufel geschehen. Die mit dem Lotmaterial versehene zu reparierende Stelle wird bis zum Schmelzen des Lotmaterials erwärmt und anschließend wird das geschmolzene Lotmaterial erstarren gelassen. Im erfindungsgemäßen Verfahren kommt als Lotmaterial eine in ihrer Durchschnittszusammensetzung der Legierung, aus der das Bauteil gefertigt wurde, entsprechende Pulvermischung zur Anwendung, die wenigstens als eine Pulversorte ein elementares Pulver der Legierung des Bauteils und/oder ein Pulver aus einer Vorlegierung der Legierung des Bauteils umfasst. Elementares Pulver soll in diesem Zusammenhang bedeuten, dass diese Pulversorte aus einem einzigen Element besteht.

Das erfindungsgemäße Verfahren fußt auf der Erkenntnis, dass Superlegierungen aus einer Anzahl von Legierungselementen aufgebaut sind, unter denen auch solche Elemente sind, die in elementarer Form einen relativ niedrigen Schmelzpunkt haben. So finden beispielsweise Nickel-Basis-Superlegierungen Anwendung, die aus zwölf Legierungselementen aufgebaut sind. Eines dieser Legierungselemente ist beispielsweise Aluminium, welches einen Schmelzpunkt von 660°C hat. Wird nun das Lotmate-rial so aufgebaut, dass die Pulvermischung in ihrer Zusammensetzung der Basislegierung des Bauteils entspricht und wenigstens ein elementares Pulver umfasst, so bestehen bereits bei niedrigen Temperaturen transiente Flüssigkeitsfilme, die für eine optimale Anbindung des Lotmaterials an das Basismaterial sorgen. In der genannten Superlegierung wäre beispielsweise ein reines Aluminiumpulver als ein elementares Pulver des Lotmaterials geeignet. Im Verlauf des Lötprozesses werden dann nach und nach alle Legierungsanteile in den Lotspalt eingebaut und der Erstarrungsprozess eingeleitet. Ähnliches gilt bei der Verwendung eines Pulvers aus einer Vorlegierung der Legierung des Bauteils anstatt eines elementaren Pulvers. Es ist aber auch die Verwendung einer Pulverkombination aus einer Vorlegierung und einem oder mehreren elementaren Pulvern möglich.

Bereits wenn im erfindungsgemäßen Verfahren als Lotmaterial eine Kombination eines Lotmaterials, welches ein elementares Pulver und/oder eine Vorlegierung umfasst, mit einem herkömmlichen Lotmaterial, also einem, das Bor oder andere den Schmelzpunkt erniedrigende Elemente enthält, Verwendung findet, kann die Bildung spröder Phasen auf ein vertretbares Maß gesenkt werden. So kann die Zugabe der sonst zur Schmelzpunkterniedrigung verwendeten, schädlichen Elemente, insbesondere die Zugabe von Bor, reduziert werden oder sogar gänzlich entfallen.

Wenn das Lotmaterial ausschließlich aus elementaren Pulvern, die jeweils lediglich aus einem der in der Legierung enthaltenen Elemente bestehen, zusammengesetzt ist, fallen die Herstellungskosten für das Lotpulver sehr gering aus. Elementare Pulver sind in der Regel billiger als Legierungspulver. Wenn dagegen eine Vorlegierung Verwendung findet, sind die Herstellungskosten gegenüber dem zuvor genannten Fall höher, jedoch kann der Schmelzpunkt des Pulvers durch geeignete Zusammensetzung der Vorlegierung noch weiter erniedrigt werden. Zudem kann dadurch die Oxidationsneigung des Pulvers reduziert werden.

Das erfindungsgemäße Verfahren lässt sich insbesondere auf Bauteile anwenden, deren Superlegierungen Legierungen auf Nickel-, Kobalt- oder Eisenbasis sind, wobei das Lotmaterial ein oder mehrere elementare Pulver der Legierungsbestandteile und/oder eine Vorlegierung der Superlegierung umfasst.

Das Erstarrenlassen des geschmolzenen Lotmaterials kann bei konstant gehaltener Temperatur erfolgen, also in Form eines isotermen Erstarrens. Außerdem ist es auch möglich, das geschmolzene Lotmaterial unter Verwendung eines Temperaturgradienten erstarren zu lassen. Der Temperaturgradient ist vorteilhafterweise derart ausgerichtet, dass er in derjenigen Richtung verläuft, in der ein epitaktisches Kristallisieren und die gerichtete Mikrostruktur in der zu reparierenden Stelle herbeigeführt werden soll. Zum Erzeugen des Temperaturgradienten eignen sich unterschiedliche Heizverfahren. Insbesondere kann ein lokales Heizen mittels eines optischen oder induktiven Heizverfahrens oder mittels eines Elektronenstrahlheizverfahrens erfolgen, wobei die Heizquelle und das Bauteil relativ zueinander bewegt werden. In dieser Ausgestaltung kann die Orientierung der Mikrostruktur im verfestigten Lotmaterial durch die Bewegungsrichtung zwischen der Heizquelle und dem Bauteil festgelegt werden.

Ein erfindungsgemäßes Lotmaterial zum Löten von Bauteilen, die aus einer Superlegierung bestehen, insbesondere aus einer Superlegierung mit einer gerichteten Mikrostruktur, weist eine in ihrer Zusammensetzung der Legierung des Bauteils entsprechende Pulvermischung auf, die wenigstens als eine Pulversorte ein elementares Pulver der Legierung des Bauteils und/oder eine Vorlegierung der Legierung des Bauteils umfasst. Das erfindungsgemäße Lotmaterial eignet sich insbesondere zur Verwendung im erfindungsgemäßen Verfahren, in dessen Zusammenhang bereits die Vorteile des erfindungsgemäßen Pulvers dargelegt worden sind.

Insbesondere kann das Lotmaterial auch ausschließlich aus elementaren Pulvern zusammengesetzt sein, welche jeweils aus einem Element der Legierung des Bauteils bestehen.

Das Lotmaterial kann auch ein Pulver umfassen, das aus einer Vorlegierung besteht, die einige Legierungsbestandteile der Legierung des Bauteils enthält.

Als zu lötende Superlegierungen kommen insbesondere Superlegierungen auf Nickel-, Kobalt- oder Eisenbasis in Frage. Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt beispielhaft eine Gasturbine in einem Längsteilschnitt.
Figur 2 zeigt in perspektivischer Ansicht eine Laufschaufel oder Leitschaufel einer Strömungsmaschine.
Figur 3 zeigt eine Brennkammer einer Gasturbine.

Die Figuren 4 bis 7 zeigen ein Ausführungsbeispiel für das erfindungsgemäße Verfahren.

Die Figur 8 zeigt eine Auflistung von Superlegierungen.

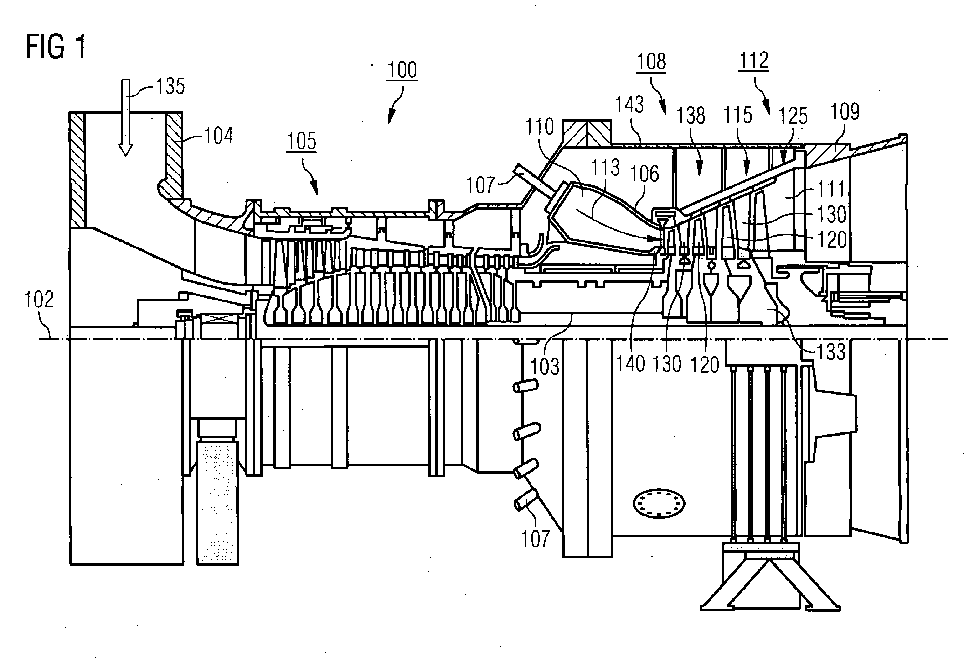

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

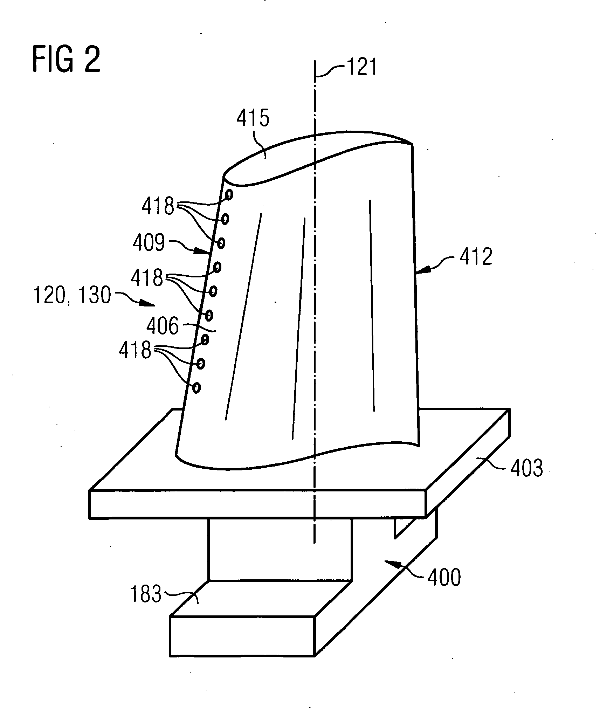

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder stängelkristallinen Strukturen werden als Bauteile für Maschinen eingesetzt, die im Betrieb hohen mechanischen, thermischen und/oder chemischen Belastungen ausgesetzt sind. Die Fertigung von derartigen einkristallinen oder stängelkristallinen Werkstücken erfolgt z.B. durch gerichtetes Erstarren aus der Schmelze. Es handelt sich dabei um Gießverfahren, bei denen die.flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber nur wenige transversale Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₃-ZrO₃, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

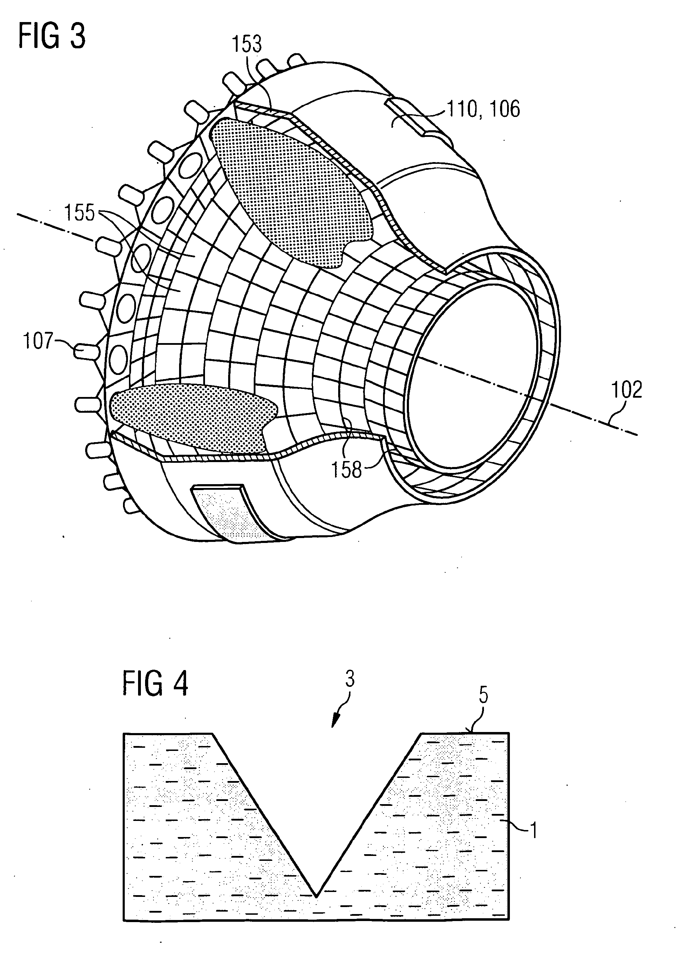

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können keramische Bauteile, massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

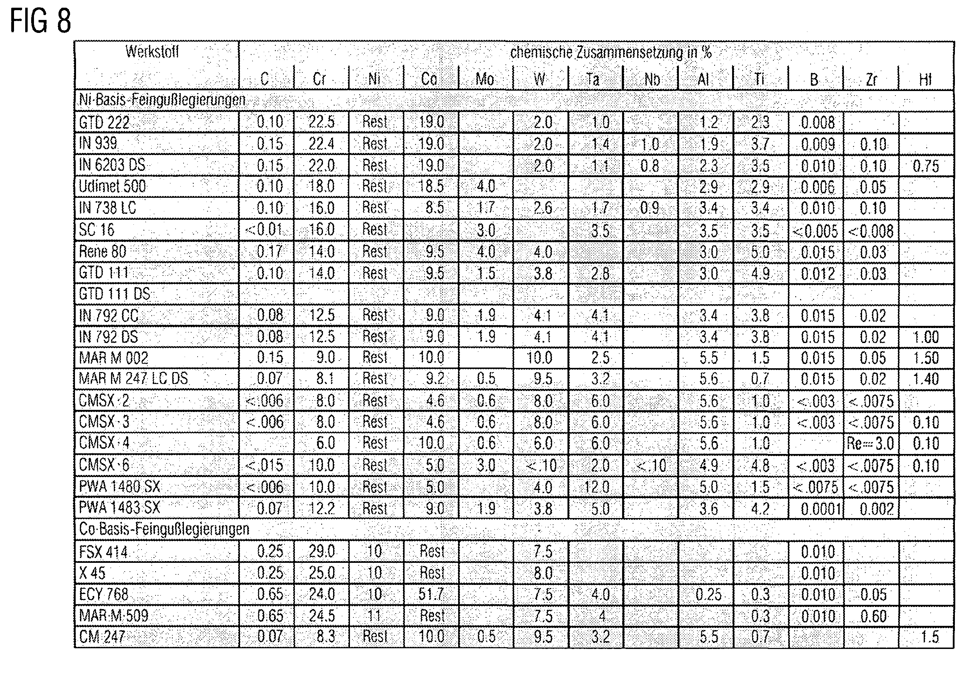

In Figur 4 ist in einer stark schematisierten Darstellung eine Gasturbinenschaufel 1 mit einem Riss 3 als zu reparierendem Bauteil dargestellt. Die Turbinenschaufel 1 ist aus einer Superlegierung auf Nickelbasis hergestellt, die neben dem Hauptbestandteil Nickel (Ni) die Elemente Chrom (Cr), Wolfram (W), Molybdän (Mo), Aluminium (Al), Tantal (Ta) und Rhenium (Re) enthält. Die Nickel-Basislegierung weist eine gerichtete Mikrostruktur mit einer vorteilhaften Orientierung auf, die in den Figuren 4 bis 7 durch waagrechte Striche angedeutet ist. Es sei an dieser Stelle angemerkt, dass bei einer stängelkristallinen Struktur eine Vorzugsrichtung der Kristallorientierung vorliegt, die jedoch keine streng eingehaltene Richtung darstellt. Vielmehr schwankt die tatsächliche Orientierung der einzelnen Körner der stängelkristallinen Struktur in der Regel um einige Grad um die Vorzugsrichtung. Eine derartige Schwankung bringt Vorteile bezüglich der Festigkeit des Materials mit sich. Der Riss 3 erstreckt sich von der Oberfläche 5 der Turbinenschaufel 1 ausgehend in die Superlegierung hinein. Zum Reparieren des Bauteils wird ein Lotmaterial 7 in Form eines Pulvers in den Riss 3 eingefüllt. Das Pulver weist dieselbe Zusammensetzung auf, wie die Superlegierung der Turbinenschaufel 1. Das Pulver ist jedoch nicht einheitlich aus Partikeln des Superlegierungsmaterials aufgebaut, sondern besteht aus verschiedenen Pulvern, die jeweils ein Element der Superlegierung (Beispiele siehe Figur 8) in Reinform enthalten. Weitere bevorzugte Beispiele sind PWA1483, PW1484 und Rene N5.

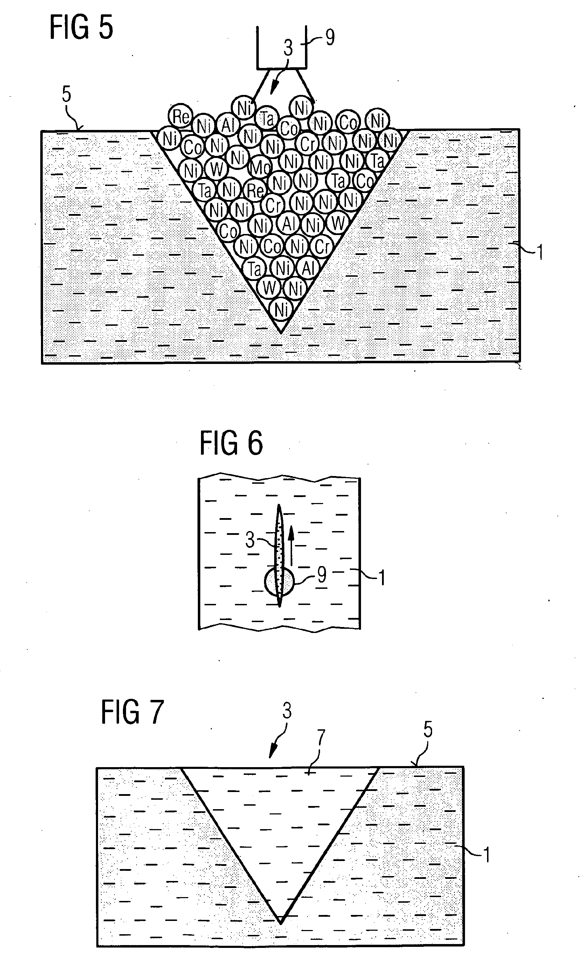

Der Legierungsprozess findet daher erst mit dem Aufschmelzen und Wiedererstarren des Lotmaterials statt. Die Turbinenschaufel 1 mit in den Riss 3 eingefülltem Lotmaterial 7 ist in Figur 5 dargestellt.

Nach dem Einfüllen des Lotmaterials 7 erfolgt eine lokale Wärmeeinwirkung im Bereich des verfüllten Risses 3. Um die Wärmeeinwirkung auf das Lot 7 zu verwirklichen, ist im vorliegenden Ausführungsbeispiel ein Laser 9 vorhanden, welcher auf das aufzuschmelzende Lot einstrahlt und diesem so die zum Schmelzen nötige Wärme zuführt. Alternativ kann die Wärme jedoch auch induktiv oder mittels eines Elektronenstrahls zugeführt werden.

Während des Lötvorganges wird ein Temperaturgradient im Bereich des Risses 3 hergestellt. Dies erfolgt, indem die Turbinenschaufel 1 und der Laser 9 relativ zueinander bewegt werden. Im Ausführungsbeispiel wird der Laser 9 parallel zur Oberfläche 5 der Turbinenschaufel 1 über das Lot 7 geführt (vgl. Figuren 5 und 6). Die Geschwindigkeit und die Leistungsdichte, mit der das Führen des Lasers 9 über das Lotmaterial 7 erfolgt, ist dabei derart gewählt, dass sich der gewünschte Temperaturgradient im Lotmaterial 7 einstellt. Der Temperaturgradient führt zu einem gerichteten Erstarren des Lotmaterials, wenn sich dieses nach dem Aufschmelzen wieder abkühlt. Mit der Bewegungsgeschwindigkeit des Lasers relativ zur Turbinenschaufel 1 und/oder der Laserleistung kann die Steilheit des Temperaturgradienten eingestellt werden. Unter Steilheit des Temperaturgradienten soll hierbei die Zu- oder Abnahme der Temperatur pro Längeneinheit zu verstehen sein. Die zum Entstehen einer gerichteten Mikrostruktur im erstarrenden Lotmaterial führende Steilheit hängt insbesondere von der Zusammensetzung des Lotmaterials ab.

Die Bewegung des Lasers 9 im dargestellten Ausführungsbeispiel erinnert an einen Schweißprozess. Im Unterschied zu einem Schweißprozess wird das umgebende Basismaterial der Turbinenschaufel 1 jedoch nicht aufgeschmolzen.

Im vorliegenden Ausführungsbeispiel erstreckt sich die vorteilhafte Orientierung der gerichteten Mikrostruktur in der Superlegierung der Turbinenschaufel 1 in der Zeichenebene von links nach rechts. Um im erstarrenden Lotmaterial das Entstehen einer gerichteten Mikrostruktur zu induzieren, deren Orientierung mit der im Basismaterial übereinstimmt, erfolgt die Bewegung des Lasers 9 relativ zur Gasturbinenschaufel 1 senkrecht zur Vorzugsrichtung der gerichteten Mikrostruktur der Superlegierung, parallel zum Verlauf des Ermüdungsrisses (vgl. Fig. 6). Ggf. kann der Laser 9 zusätzlich eine Pendelbewegung senkrecht zum Verlauf des Ermüdungsrisses ausführen.

Im erfindungsgemäßen Verfahren brauchen dem Lotmaterial 7 insbesondere keine die Schmelztemperatur senkenden Zusätze wie etwa Bor beigemischt zu sein. Aufgrund der Tatsache, dass das Lotmaterial aus reinen Phasen und/oder einer Vorlegierung der Legierungsbestandteile besteht, weisen die verschiedenen Pulver des Lotmaterials unterschiedliche Schmelztemperaturen auf. So schmilzt beispielsweise das Aluminium bereits bei einer Temperatur von 660°C, was weit unterhalb der Schmelztemperatur der Superlegierung (ca. 1200°C) liegt. Es entsteht daher für das Aluminium bereits bei relativ niedrigen Temperaturen ein transienter Flüssigkeitsfilm, der für eine optimale Anbindung des Lotmaterials an die angrenzende Superlegierung sorgt. Im weiteren Verlauf der Wärmeeinwirkung werden dann nach und nach alle Legierungsbestandteile in die sich im Spalt bildende Legierung eingebaut. Auf diese Weise kann auf die Zugabe des sonst zur Schmelzpunkterniedrigung notwendigen, aber schädlichen Bors verzichtet werden. Es sei an dieser Stelle angemerkt, dass obwohl im Ausführungsbeispiel alle Bestandteile des Lotmaterials Pulver aus reinen Elementen der Superlegierungsbestandteile sind, es grundsätzlich auch ausreicht, wenn wenigstens ein Bestandteil der Lotpulvermischung als Pulver eines reinen Elementes oder einer Vorlegierung vorliegt. Die übrigen Bestandteile der Lotpulvermischung können dann aus einer oder mehreren Legierungen bestehen, wobei die Pulvermischung der Legierungszusammensetzung der umgebenden Superlegierung entspricht. Das reine Pulver bzw. die Vorlegierung sollte jedoch eine niedrige Schmelztemperatur als das Superlegierungsmaterial aufweisen.

Beim Wiedererstarren des Lotmaterials wird dieses epiktaktisch an das umgebende Superlegierungsmaterial angebunden. Mit anderen Worten, das erstarrende Legierungsmaterial 7 führt die kristalline Struktur des angrenzenden Superlegierungsmaterials fort. Nachdem das Lotmaterial 7 wieder erstarrt ist, weist es daher dieselbe gerichtete Mikrostruktur wie die angrenzende Superlegierung auf. Auf diese Weise kann die kristalline Struktur des Superlegierungsmaterials in das erstarrende Legierungsmaterial hineinwachsen. Nachdem das Lotmaterial 7 wieder erstarrt ist, weist die Reparaturstelle daher dieselbe gerichtete Mikrostruktur wie das umgebende Superlegierungsmaterial auf. Dieser Zustand ist in Figur 7 angedeutet.

Statt einem kontinuierlichen Bewegen des Lasers 9 zum Herbeiführen eines Temperaturgradienten ist es auch möglich, die Laserstrahlen so aufzuweiten oder den Laser so pendeln zu lassen, dass der Laser das gesamte Lotmaterial bestrahlt und dieses gleichmäßig erwärmt. In diesem Fall kann durch geeignete Abfuhr der Wärme des Lotmaterials 7 in die umgebende Superlegierung ein Temperaturgradient entstehen. Die Temperatur ist dann an der äußeren Oberfläche des Lotmaterials 7 am höchsten und nimmt zur Grenzfläche des Lotmaterials 7 mit der Superlegierung der Turbinenschaufel 1 ab. Um eine geeignete Abfuhr der Wärme zu realisieren, kann die Turbinenschaufel 1 gegebenenfalls an geeigneten Stellen gekühlt oder erwärmt werden, sodass sich im Lotmaterial 7 der gewünschte Temperaturgradient einstellt.

Im vorliegenden Ausführungsbeispiel wurde das Aufschmelzen und Erstarrenlassen des Lotmaterials 7 mit Hilfe eines Temperaturgradienten herbeigeführt. Alternativ besteht jedoch ggf. auch die Möglichkeit, den Lötvorgang unter Verwendung eines isotermen Lötverfahrens durchzuführen.

Das erfindungsgemäße Verfahren bietet nicht nur den Vorteil, dass auf die Schmelztemperatur absenkende Beimischungen zum Lotmaterial 7 verzichtet werden kann, sondern ermöglicht es auch, Risse mit einer Breite von mehr als 200 µm so zu reparieren, dass das Lotmaterial nach seiner Verfestigung eine gerichtete Mikrostruktur aufweist, insbesondere dann, wenn im Verfahren ein Temperaturgradient Verwendung findet.

Folgende bevorzugte Möglichkeiten für das Lotmaterial 7 gibt es unter Verwendung folgender Pulversorten:
1. ELEMENTAR_SL
2. SL + ELEMENTAR_SL
3. Vorlegierung + ELEMENTAR,
   wobei gilt: Vorlegierung + ELEMENTAR = Superlegierung des Bauteils
4. SL + Vorlegierung + ELEMENTAR,
   wobei gilt: Vorlegierung + ELEMENTAR = Superlegierung des Bauteils
5. SL + Vorlegierung1 + Vorlegierung2,
   wobei gilt: Vorlegierung1 + Vorlegierung2 = Superlegierung des Bauteils
6. ELEMENTAR + Vorlegierung1 + Vorlegierung2,
   wobei gilt: ELEMENTAR + Vorlegierung1 + Vorlegierung2 = Superlegierung des Bauteils.

Es können natürlich auch mehrere elementare Pulver (ELEMENTAR) in den Beispielen 3, 4 und 7 verwendet werden.

Dabei bedeutet:
- ELEMENTAR_SL: eine Pulvermischung, die nur aus elementaren Pulvern (Fig. 5) besteht und in ihrer Zusammensetzung einer Legierung eines Bauteils, die wiederum bevorzugt einer Superlegierung entspricht, besteht.
- ELEMENTAR: ein elementares Pulver, das keine legierten Pulverteilchen aufweist.
- SL: ein legiertes Pulver mit der Zusammensetzung einer Legierung oder Superlegierung (Fig. 8). Alle Pulverteilchen haben die gleiche chemische Zusammensetzung.
- Vorlegierung bedeutet ein legiertes Pulver, das in der chemischen Zusammensetzung keiner Legierung des Bauteils (Fig. 8) entspricht. Alle Pulverteilchen haben die gleiche chemische Zusammensetzung.

Das zweite Ausführungsbeispiel bedeutet, dass ein Superlegierungspulver "SL" verwendet wird, dem eine Pulvermischung "ELEMENTAR_SL" zugemischt wird. In der Zusammensetzung ändert sich daher gegenüber "SL" und "Elementar_SL" nichts.

Im dritten Beispiel wird ein Vorlegierungspulver verwendet, dem elementares Pulver hinzugemischt wird.

"= Superlegierung des Bauteils" bedeutet, dass sich in der Zusammensetzung der Vorlegierung und dem elementaren Pulver die Zusammensetzung einer Legierung des zu reparierenden Bauteils ergeben soll, insbesondere eine Superlegierung.

## Patentansprüche

1. Verfahren zum Reparieren von Bauteilen (1),
die aus einer Superlegierung bestehen,
insbesondere zum Reparieren von Bauteilen (1),
die aus einer Superlegierung mit einer gerichteten Mikrostruktur bestehen,
derart, dass eine reparierte Stelle ebenfalls eine gerichtete Mikrostruktur aufweist,
mit den Schritten:
- Versehen der zu reparierende Stelle (3) mit einem Lotmaterial (7),
- Erwärmen der mit dem Lotmaterial (7) versehenen zu reparierenden Stelle (3) bis zum Schmelzen des Lotmaterials (7) und
- Erstarrenlassen des geschmolzenen Lotmaterials (7),
wobei als Lotmaterial (7) eine Pulvermischung zur Anwendung kommt,
die der Zusammensetzung der Legierung des Bauteils (1) entspricht,
die wenigstens als eine Pulversorte ein elementares Pulver der Legierung des Bauteils (1) und/oder eine Vorlegierung der Legierung des Bauteils (1) umfasst,
und ausgewählt ist aus der Gruppe von Pulvern:
- ELEMENTAR_SL
- SL + ELEMENTAR_SL
- Vorlegierung + ELEMENTAR,
wobei gilt: Vorlegierung + ELEMENTAR = Superlegierung des Bauteils,
- SL + Vorlegierung + ELEMENTAR,
wobei gilt: Vorlegierung + ELEMENTAR = Superlegierung des Bauteils,
- SL + Vorlegierung1 + Vorlegierung2,
wobei gilt: Vorlegierung1 + Vorlegierung2 =
Superlegierung des Bauteils,
- ELEMENTAR + Vorlegierung1 + Vorlegierung2,
wobei gilt: ELEMENTAR + Vorlegierung1 + Vorlegierung2 = Superlegierung des Bauteils,
wobei bedeutet:
• ELEMENTAR_SL: eine Pulvermischung, die nur aus elementaren Pulvern besteht und in Zusammensetzung der Legierung des Bauteils (1) entspricht,
• ELEMENTAR: ein elementares Pulver, das keine legierten Pulverteilchen aufweist,
• SL: ein legiertes Pulver mit der Zusammensetzung der Superlegierung des Bauteils, wobei alle Pulverteilchen die gleiche chemische Zusammensetzung haben,
• Vorlegierung: ein legiertes Pulver, das in der chemischen Zusammensetzung keiner Legierung des Bauteils (1) entspricht, wobei alle Pulverteilchen die gleiche chemische Zusammensetzung haben.

2. Verfahren nach Anspruch 1,
in dem das Lotmaterial ausschließlich aus elementaren Pulvern zusammengesetzt ist, welche jeweils aus einem Element der Legierung des Bauteils (1) bestehen.

3. Verfahren nach Anspruch 1,
in dem das Lotmaterial (7) ein Pulver aus einer Vorlegierung umfasst die einige Legierungsbestandteile der Legierung des Bauteils (1) enthält.

4. Verfahren nach einem der Ansprüche 1 bis 3,
in dem die Superlegierung eine Superlegierung auf Nickel-, Kobalt- oder Eisenbasis ist.

5. Verfahren nach einem der Ansprüche 1 bis 4,
in dem das Erstarrenlassen des geschmolzenen Lotmaterials (7) bei konstant gehaltener Temperatur erfolgt .

6. Verfahren nach einem der Ansprüche 1 bis 5,
in dem das Erstarrenlassen des geschmolzenen Lotmaterials (7) unter Verwendung eines Temperaturgradienten erfolgt.

7. Verfahren nach Anspruch 6,
in dem der Temperaturgradient derart ausgerichtet ist, dass er in derjenigen Richtung verläuft, in der ein epitaktisches Wachstum in der zu reparierenden Stelle (3) herbeigeführt werden soll.

8. Verfahren nach Anspruch 6 oder 7,
in dem ein lokales Heizen mittels eines optischen oder induktiven Heizverfahrens oder eines Elektronenstrahlheizverfahrens erfolgt, wobei die Heizquelle (9) und das Bauteil (1) relativ zueinander bewegt werden.

9. Lotmaterial zum Löten von Bauteilen (1),
die aus einer Superlegierung bestehen,
insbesondere aus einer Superlegierung mit einer gerichteten Mikrostruktur,
wobei das Lotmaterial (7) eine Pulvermischung ist,
die der Zusammensetzung der Legierung des Bauteils (1) entspricht,
die wenigstens als eine Pulversorte ein elementares Pulver und/oder eine Vorlegierung des Bauteils (1) umfasst,
und ausgewählt ist aus der Gruppe von Pulvern:
- ELEMENTAR_SL
- SL + ELEMENTAR_SL
- Vorlegierung + ELEMENTAR,
wobei gilt: Vorlegierung + ELEMENTAR = Superlegierung des Bauteils
- SL + Vorlegierung + ELEMENTAR,
wobei gilt: Vorlegierung + ELEMENTAR = Superlegierung des Bauteils,
- SL + Vorlegierung1 + Vorlegierung2,
wobei gilt: Vorlegierung1 + Vorlegierung2 = Superlegierung des Bauteils,
- ELEMENTAR + Vorlegierung1 + Vorlegierung2,
wobei gilt: ELEMENTAR + vorlegierung1 + Vorlegierung2 = Superlegierung des Bauteils,
wobei bedeutet:
• ELEMENTAR_SL: eine Pulvermischung, die nur aus elementaren Pulvern besteht und in seiner Zusammensetzung der Legierung des Bauteils (1) entspricht.
• ELEMENTAR: ein elementares Pulver, das keine legierten Pulverteilchen aufweist,
• SL: ein legiertes Pulver mit der Zusammensetzung einer Superlegierung, wobei alle Pulverteilchen die gleiche chemische Zusammensetzung haben,
• Vorlegierung: ein legiertes Pulver, das in der chemischen Zusammensetzung keiner Legierung des Bauteils (1) entspricht, wobei alle Pulverteilchen die gleiche chemische Zusammensetzung haben.

10. Lotmaterial nach Anspruch 9,
das zumindest ELEMENTAR oder ELEMENTAR_SL enthält.

11. Lotmaterial nach Anspruch 9,
das zumindest ELEMENTAR_SL enthält.

12. Lotmaterial nach Anspruch 9 oder 11,
das zumindest ein Superlegierungspulver SL enthält.

13. Lotmaterial nach Anspruch 9, 11 oder 12,
das zumindest ein Vorlegierungspulver enthält, insbesondere nur ein Vorlegierungspulver enthält, das in einer chemischen Zusammensetzung keiner Legierung des Bauteils (1) entspricht.

14. Lotmaterial nach Anspruch 9, 11, 12 oder 13, das zumindest ELEMENTAR enthält.

15. Lotmaterial nach Anspruch 9,
welches ausschließlich aus ELEMENTAR_SL zusammengesetzt ist.

16. Lotmaterial nach Anspruch 9, 11 oder 12, welches
ELEMENTAR_SL und ein Superlegierungspulver SL enthält,
insbesondere aus ELEMENTAR_SL und einem Superlegierungspulver (SL) besteht.

17. Lotmaterial nach Anspruch 9, 13 oder 14, welches ELEMENTAR und eine Vorlegierung des Bauteils (1) enthält, insbesondere aus ELEMENTAR und einer Vorlegierung besteht.

18. Lotmaterial nach Anspruch 9, 12 oder 13,
das ein Superlegierungspulver (SL),
eine erste Vorlegierung1 und
eine zweite Vorlegierung2 des Bauteils (1) aufweist,
wobei die Zusammensetzung der Vorlegierung1 und der Vorlegierung2 der Zusammensetzung der Legierung des Bauteils (1) entspricht,
insbesondere aus einem Superlegierungspulver (SL), einer ersten Vorlegierung1 und einer zweiten Vorlegierung2 besteht.

19. Lotmaterial nach Anspruch 9, 12, 13 oder 14, welches ein Superlegierungspulver (SL), eine Vorlegierung des Bauteils (1) und
ELEMENTAR umfasst,
wobei das Vorlegierungspulver und
ELEMENTAR in ihrer Zusammensetzung der Legierung des Bauteils entspricht,
insbesondere aus einem Superlegierungspulver (SL), einer Vorlegierung und ELEMENTAR besteht.

20. Lotmaterial nach einem der Ansprüche 9 bis 19, in dem die Superlegierung eine Superlegierung auf Nickel-, Kobalt- oder Eisenbasis ist.

## Claims

1. Method for repairing components (1)
which consist of a superalloy,
in particular for repairing components (1)
which consist of a superalloy having a directional microstructure
such that a repaired site likewise has a directional microstructure,
having the steps:
- providing the site (3) to be repaired with a solder material (7),
- heating the site (3) to be repaired, provided with the solder material (7), until the solder material (7) melts and
- allowing the molten solder material (7) to solidify,
a powder mixture being employed as solder material (7),
which powder mixture corresponds to the composition of the alloy of the component (1)
and which comprises at least as one powder type an elementary powder of the alloy of the component (1) and/or a prealloy of the alloy of the component (1),
and is chosen from the group of powders:
- ELEMENTARY_SA,
- SA + ELEMENTARY_SA,
- Prealloy + ELEMENTARY,
where: Prealloy + ELEMENTARY = Superalloy of the component,
- SA + Prealloy + ELEMENTARY,
where: Prealloy + ELEMENTARY = Superalloy of the component,
- SA + Prealloy1 + Prealloy2,
where: Prealloy1 + Prealloy2 = Superalloy of the component,
- ELEMENTARY + Prealloy1 + Prealloy2,
where: ELEMENTARY + Prealloy1 +Prealloy2 = Superalloy of the component,
the meanings being:
• ELEMENTARY_SA: a powder mixture consisting only of elementary powders and corresponding in its composition to the alloy of the component (1),
• ELEMENTARY: an elementary powder comprising no alloyed powder particles,
• SA: an alloyed powder having the composition of the superalloy of the component, all powder particles having the same chemical composition,
• Prealloy: an alloyed powder, the chemical composition of which corresponds to no alloy of the component (1), all powder particles having the same chemical composition.

2. Method according to Claim 1,
wherein the solder material is composed exclusively of elementary powders, which respectively consist of one element of the alloy of the component (1).

3. Method according to Claim 1,
wherein the solder material (7) comprises a powder of a prealloy, which contains some alloy constituents of the alloy of the component (1).

4. Method according to one of Claims 1 to 3,
wherein the superalloy is a nickel-, cobalt- or iron-based superalloy.

5. Method according to one of Claims 1 to 4,
wherein the molten solder material (7) is allowed to solidify with a temperature kept constant.

6. Method according to one of Claims 1 to 5,
wherein the molten solder material (7) is allowed to solidify with the use of a temperature gradient.

7. Method according to Claim 6,
wherein the temperature gradient is aligned so that it extends in the direction in which epitaxial growth is intended to be induced in the region of the site (3) to be repaired.

8. Method according to Claim 6 or 7,
wherein local heating is carried out by means of an optical or inductive heating method or an electron beam heating method, the heat source (9) and the component (1) being moved relative to one another.

9. Solder material for soldering components (1),
which consist of a superalloy,
particularly a superalloy having a directional microstructure, the solder material (7) being a powder mixture,
which corresponds to the composition of the alloy of the component (1)
and which comprises at least as one powder type an elementary powder and/or a prealloy of the component (1),
and is chosen from the group of powders:
- ELEMENTARY_SA,
- SA + ELEMENTARY_SA,
- Prealloy + ELEMENTARY,
where: Prealloy + ELEMENTARY = Superalloy of the component,
- SA + Prealloy + ELEMENTARY,
where: Prealloy + ELEMENTARY = Superalloy of the component,
- SA + Prealloy1 + Prealloy2,
where: Prealloy1 + Prealloy2 = Superalloy of the component,
- ELEMENTARY + Prealloy1 + Prealloy2,
where: ELEMENTARY + Prealloy1 +Prealloy2 = Superalloy of the component,
the meanings being:
• ELEMENTARY_SA: a powder mixture consisting only of elementary powders and corresponding in its composition to the alloy of the component (1),
• ELEMENTARY: an elementary powder comprising no alloyed powder particles,
• SA: an alloyed powder having the composition of a superalloy, all powder particles having the same chemical composition,
• Prealloy: an alloyed powder, the chemical composition of which corresponds to no alloy of the component (1), all powder particles having the same chemical composition.

10. Solder material according to Claim 9,
which contains at least ELEMENTARY or ELEMENTARY_SA.

11. Solder material according to Claim 9,
which contains at least ELEMENTARY_SA.

12. Solder material according to Claim 9 or 11,
which contains at least one superalloy powder SA.

13. Solder material according to Claim 9, 11 or 12,
which contains at least one prealloy powder, in particular only one prealloy powder, the chemical composition of which corresponds to no alloy of the component (1).

14. Solder material according to Claim 9, 11, 12 or 13,
which contains at least ELEMENTARY.

15. Solder material according to Claim 9,
which is composed exclusively of ELEMENTARY_SA.

16. Solder material according to Claim 9, 11 or 12,
which contains ELEMENTARY_SA and a superalloy powder SA,
and in particular consists of ELEMENTARY_SA and a superalloy powder (SA).

17. Solder material according to Claim 9, 13 or 14,
which contains ELEMENTARY and a prealloy of the component (1), and in particular consists of ELEMENTARY and a prealloy.

18. Solder material according to Claim 9, 12 or 13,
which comprises a superalloy powder (SA),
a first prealloyl and
a second prealloy2 of the component (1),
the compositions of the prealloyl and the prealloy2 corresponding to the composition of the alloy of the component (1),
and in particular consists of a superalloy powder (SA), a first prealloyl and a second prealloy2.

19. Solder material according to Claim 9, 12, 13 or 14, which comprises a superalloy powder (SA), a prealloy of the component (1) and ELEMENTARY,
the compositions of the prealloy powder and the ELEMENTARY corresponding to the composition of the alloy of the component, and in particular consists of a superalloy powder (SA), a prealloy and ELEMENTARY.

20. Solder material according to one of Claims 9 to 19, wherein the superalloy is a nickel-, cobalt- or iron-based superalloy.

## Revendications

1. Procédé de réparation d'éléments ( 1 ),
qui sont en un superalliage,
notamment pour réparer des éléments ( 1 ),
qui sont en un superalliage en ayant une structure microscopique dirigée,
de manière à ce qu'un emplacement réparé ait également une structure microscopique dirigée,
comprenant les stades dans lesquels :
- on munit l'emplacement ( 3 ) à réparer d'un matériau ( 7 ) de brasure,
- on chauffe l'emplacement ( 3 ) à réparer, qui est muni du matériau ( 7 ) de brasure, jusqu'à fusion du matériau ( 7 ) de brasure et
on laisse se solidifier le matériau ( 7 ) de brasure fondu, en utilisant comme matériau ( 7 ) de brasure un mélange de poudre,
qui correspond à la composition de l'alliage de l'élément ( 1 ),
qui comprend au moins comme une sorte de poudre une poudre élémentaire de l'alliage de l'élément ( 1 ) et/ou un alliage précurseur de l'alliage de l'élément ( 1 ),
et choisie dans le groupe de poudres :
- ELEMENTAR_SL
- SL + ELEMENTAR_SL,
- Alliage précurseur + ELEMENTAR,
dans lequel alliage précurseur + ELEMENTAR = superalliage de l'élément,
- SL + alliage précurseur + ELEMENTAR,
dans lequel : alliage précurseur + ELEMENTAR = superalliage de l'élément,
- SL + alliage précurseur1 + alliage précurseur2,
dans lequel : alliage précurseur1 + alliage précurseur2 = superalliage de l'élément,
- ELEMENTAR + alliage précurseur1 + alliage précurseur2 dans lequel : ELEMENTAR + alliage précurseur1 + alliage précurseur2 = superalliage de l'élément,
dans lequel :
• ELEMENTAR_SL : signifie un mélange de poudres, qui n'est constitué que de poudres élémentaires et qui correspond dans sa composition à l'alliage de l'élément ( 1 ),
• ELEMENTAR : signifie une poudre élémentaire qui n'a pas de particule de poudre alliée,
• SL : signifie une poudre alliée ayant la composition du superalliage de l'élément, toutes les particules de poudre ayant la même composition chimique,
• Alliage précurseur : une poudre alliée qui ne correspond pas dans la composition chimique à un alliage de l'élément ( 1 ), toutes les particules de poudre ayant la même composition chimique.

2. Procédé suivant la revendication 1,
dans lequel le matériau de brasure est composé exclusivement de poudres élémentaires qui sont constituées respectivement d'un élément de l'alliage de l'élément ( 1 ).

3. Procédé suivant la revendication 1,
dans lequel le matériau ( 7 ) de brasure comprend une poudre en un alliage précurseur qui contient quelques constituants d'alliage de l'alliage de l'élément ( 1 ).

4. Procédé suivant l'une des revendications 1 à 3,
dans lequel le superalliage est un superalliage à base de nickel, de cobalt ou de fer.

5. Procédé suivant l'une des revendications 1 à 4,
dans lequel on laisse solidifier, à une température maintenue constante, le matériau ( 7 ) de brasure fondu.

6. Procédé suivant l'une des revendications 1 à 5,
dans lequel on laisse se solidifier, en utilisant un gradient de température, le matériau ( 7 ) de brasure fondu.

7. Procédé suivant l'une des revendications 1 à 6,
dans lequel on dirige le gradient de température de manière à ce qu'il s'étende dans la direction dans laquelle une croissance par épitaxie dans l'emplacement ( 3 ) à réparer doit être provoquée.

8. Procédé suivant la revendication 6 ou 7,
dans lequel on effectue un chauffage local au moyen d'un procédé de chauffage optique ou par induction ou d'un procédé de chauffage par faisceau d'électrons, la source ( 9 ) de chauffage et l'élément ( 1 ) étant déplacés l'un par rapport à l'autre.

9. Matériau de brasure pour la brasure d'éléments ( 1 ),
qui est en un superalliage,
notamment en un superalliage ayant une structure microscopique dirigée,
dans lequel le matériau ( 7 ) de brasure est un mélange de poudres, qui correspond à la composition de l'alliage de l'élément ( 1 ),
qui comprend au moins comme une sorte de poudre une poudre élémentaire et/ou un alliage précurseur de l'élément ( 1 ),
et choisie dans le groupe des poudres :
- ELEMENTAR_SL
- SL + ELEMENTAR_SL,
- Alliage précurseur + ELEMENTAR,
dans lequel alliage précurseur + ELEMENTAR = superalliage de l'élément,
- SL + alliage précurseur + ELEMENTAR,
dans lequel : alliage précurseur + ELEMENTAR = superalliage de l'élément,
- SL + alliage précurseur1 + alliage précurseur2,
dans lequel : alliage précurseur1 + alliage précurseur2 = superalliage de l'élément,
- ELEMENTAR + alliage précurseur1 + alliage précurseur2 dans lequel : ELEMENTAR + alliage précurseur1 + alliage précurseur2 = superalliage de l'élément,
dans lequel :
• ELEMENTAR_SL : signifie un mélange de poudres, qui n'est constitué que de poudres élémentaires et qui correspond dans sa composition à l'alliage de l'élément ( 1 ),
• ELEMENTAR : signifie une poudre élémentaire qui n'a pas de particule de poudre alliée,
• SL : signifie une poudre alliée ayant la composition du superalliage de l'élément, toutes les particules de poudre ayant la même composition chimique,
• Alliage précurseur : une poudre alliée qui ne correspond pas dans la composition chimique à un alliage de l'élément ( 1 ), toutes les particules de poudre ayant la même composition chimique.

10. Matériau de brasure suivant la revendication 9, qui contient au moins ELEMENTAR ou des ELEMENTAR_SL.

11. Matériau de brasure suivant la revendication 9, qui contient au moins des ELEMENTAR_SL.

12. Matériau de brasure suivant la revendication 9 ou 11, qui contient au moins une poudre de superalliage SL.

13. Matériau de brasure suivant la revendication 9, 11 ou 12, qui contient au moins une poudre d'alliage précurseur, notamment seulement une poudre d'alliage précurseur, qui dans la composition chimique ne correspond pas à un alliage de l'élément ( 1 ).

14. Matériau de brasure suivant la revendication 9, 11, 12 ou 13, qui contient au moins ELEMENTAR.

15. Matériau de brasure suivant la revendication 9, qui est composé exclusivement de l'ELEMENTAR_SL.

16. Matériau de brasure suivant la revendication 9, 11 ou 12, qui contient ELEMENTAR_SL et une poudre de superalliage SL,
en étant constituée notamment d'ELEMENTAR_SL et d'une poudre de superalliage ( SL ).

17. Matériau de brasure suivant la revendication 9, 13 ou 14, qui contient ELEMENTAR et un alliage précurseur de l'élément ( 1 ),
en étant constitué notamment d'ELEMENTAR et d'un alliage précurseur.

18. Matériau de brasure suivant la revendication 9, 12 ou 13, qui a une poudre de superalliage SL,
un premier alliage1 précurseur et
un deuxième alliage2 précurseur de l'élément ( 1 ),
dans lequel la composition de l'alliage1 précurseur et de l'alliage2 précurseur correspond à la composition de l'alliage de l'élément ( 1 ),
en étant constitué notamment d'une poudre ( SL ) de superalliage, d'un premier alliage1 précurseur et d'un deuxième alliage2 précurseur.

19. Matériau de brasure suivant la revendication 9, 12, 13 ou 14, qui comprend une poudre ( SL ) de superalliage, un alliage précurseur de l'élément ( 1 ) et ELEMENTAR,
dans lequel la poudre de l'alliage précurseur et ELEMENTAR correspond dans leur composition à l'alliage de l'élément,
en étant constitué notamment d'une poudre ( SL ) de superalliage d'un alliage précurseur et d'ELEMENTAR.

20. Matériau de brasure suivant l'une des revendications 9 à 19, dans lequel le superalliage est un superalliage à base de nickel, de cobalt ou de fer.
